# EUROPEAN PATENT APPLICATION

(11) **EP 4 671 585 A1**
(43) Date of publication of application: **31.12.2025**
(21) Application number: 24760044.8
(22) Date of filing: 29.01.2024
(51) Int. Cl.: F16K 31/04

(54) **ELECTRIC VALVE**

(30) Priority: 24.02.2023 JP 2023026961
(71) Applicant: Fujikoki Corporation, Tokyo 158-0082 (JP)
(72) Inventor: YOSHIDA Tatsuya, Tokyo 158-0082 (JP); HAYAKAWA Junya, Tokyo 158-0082 (JP); HOSOYA Takeshi, Tokyo 158-0082 (JP); ARAI Yusuke, Tokyo 158-0082 (JP); OKAYAMA Masaru, Tokyo 158-0082 (JP)
(74) Representative: Ter Meer Steinmeister & Partner
(86) International application number: PCT/JP2024/002580
(87) International publication number: WO 2024/176737

(57) **Abstract**

An electrically operated valve includes a valve main body having a valve chamber, a valve body moving forward and backward with respect to a valve seat, an electric motor having a rotor and a stator, a can accommodating the rotor inside and arranging the stator outside, a connection member connecting the can and the valve main body, and a seal member extending to surround the connection member and coming into contact with an outer peripheral surface of the connection member and an inner peripheral surface of a housing of the electric motor in a pressing state. The connection member is formed by press working, and has a tubular part. A rigid component is fitted and inserted into the tubular part. The tubular part, the rigid component and the seal member are arranged in such a manner as to overlap each other in an axial direction of the electrically operated valve.

## Description

### TECHNICAL FIELD

The present invention relates to an electrically operated valve, and more particularly relates to a structure of a connection part which connects a valve main body and an electric motor.

### BACKGROUND ART

An electrically operated valve controlling an opening degree of a valve with the use of an electric motor such as a stepping motor has been conventionally used in a refrigeration cycle apparatus which is provided with a refrigerant circuit such as an air conditioner and a refrigerating and freezing device.

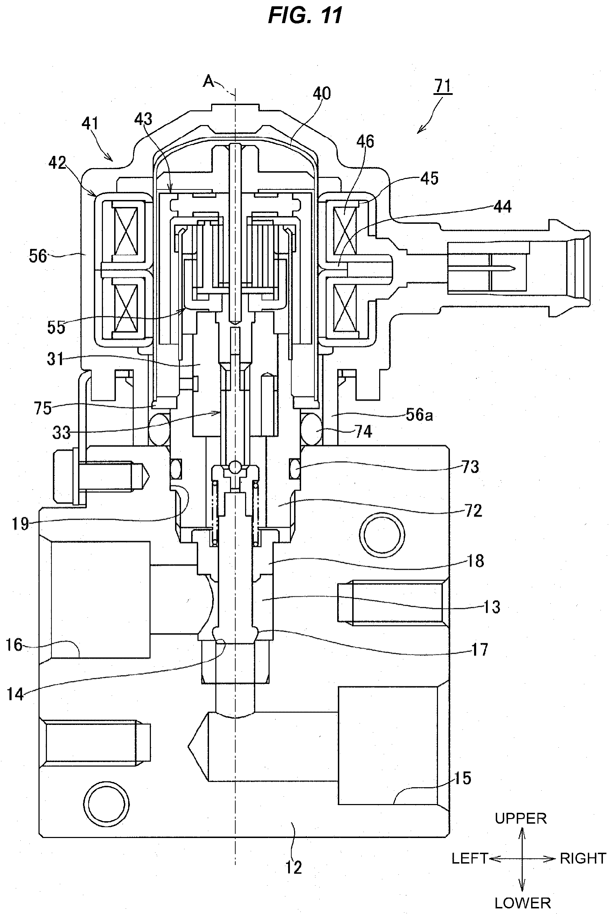

Fig. 11 shows an example of the electrically operated valve as mentioned above. As shown in this drawing, a conventional electrically operated valve 71 is provided with a valve main body 12 which has a valve chamber 13 in an inner part thereof and has a flow passage (an inflow passage 15 and an outflow passage 16) allowing the refrigerant to flow into and out of the valve chamber 13, a valve seat 14 which is formed in an opening part of the inflow passage 15 to the valve chamber 13, a valve body 17 which changes an amount (flow rate) of the passing refrigerant by moving forward and backward (moving up and down) with respect to the valve seat 14, a valve body guide member which is disposed so as to close an upper surface of the valve chamber 13 and supports the valve body 17 in such a manner as to be movable up and down, an electric motor 41 which drives the valve body 17, a speed reduction mechanism 55 which reduces the rotation of the electric motor 41, a transmission mechanism 33 which converts the reduced rotating motion into a linear motion to transmit to the valve body 17, a connection member 72 which connects the electric motor 41 and the valve main body 12, and a can (a sealed container) 40 which forms a sealed space in an upper surface of the valve main body 12 together with the connection member 72.

The connection member 72 is a tubular member which has a center hole penetrating in an up-and-down direction (a direction of an axis line A), and is fixed to the valve main body 12 by being screwed into a connection opening 19 pierced in the upper surface of the valve main body 12 in such a manner as to communicate with the valve chamber 13. A seal member (O-ring) 73 preventing the refrigerant from leaking out is disposed between an outer peripheral surface of the connection member 72 and the valve main body 12. The seal member 73 is called as "first seal member" in the present invention, and a function of the first seal member 73 is called as "first sealing function".

The can 40 is joined by welding to an upper outer peripheral surface of the connection member 72 via a ring-shaped base member 75. Further, a screw bearing 31 is fitted and inserted into an upper part of a center hole of the connection member 72, and a feed screw mechanism 33 is disposed as the transmission mechanism in an inner part of the screw bearing 31.

In the meantime, the electric motor 41 is constructed, for example, by a stepping motor. The stepping motor 41 includes a stator 42 which is arranged in an outer side of the can 40, a rotor which is rotatably arranged in an inner side of the can 40, and a resin molded cover 56. The resin molded cover 56 has a cylindrical leg part 56a surrounding the connection member 72 in a lower end part thereof, and a seal member (O-ring) 74 is disposed in such a manner as to be interposed between an inner peripheral surface of the cylindrical leg part 56a and an outer peripheral surface of the connection member 72, for preventing moisture from infiltrating into the electric motor 41. The seal member 74 is called as "second seal member" in the present invention, and a function of the second seal member 74 is called as "second sealing function".

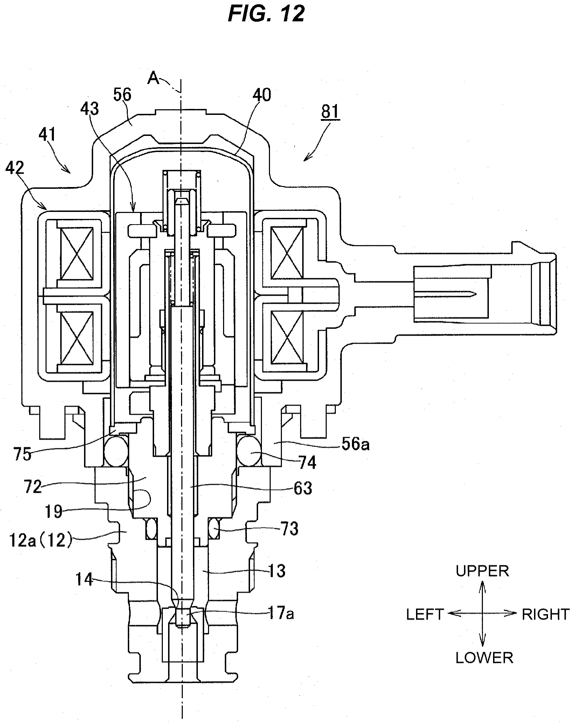

Further, Fig. 12 shows the other example of the conventional electrically operated valve. An electrically operated valve 81 shown in this drawing is configured to adjust the flow rate of the refrigerant by moving up and down a valve body 17a with the used of the electric motor (the stepping motor) 41 in the same manner as the electrically operated valve 71 (Fig. 11). However, as is different from the electrically operated valve 71, a rod-like valve shaft 63 extending from an inner part of a rotor 43 to the valve chamber 13 in the up-and-down direction is provided along a center axis line A of the electrically operated valve 81, and the valve body 17a is integrally disposed in a lower end of a valve shaft 63. Further, the rotor 43 is provided so as to be rotatable to the inner side of the can 41 and movable in the up-and-down direction, and the valve shaft 63 and the rotor 43 integrally move up and down, thereby adjusting an opening degree of the valve.

Further, in the electrically operated valve 81, the valve main body is constructed by a main body part 12a which has a valve chamber 13 in an inner part thereof and to which the connection member 72 is screwed and fixed, and a flow passage block (not shown) which is provided with an inflow passage and an outflow passage in an inner part thereof and to which the main body part 12a is screwed and fixed. However, the connection structure between the electric motor 41 and the valve main body (the main body part 12a), that is, the connection member 72, the first seal member 73 and the second seal member 74 have the same structure as the electrically operated valve 71.

Further, the following patent literature 1 is provided as a literature disclosing the electrically operated valve.

### CITATION LIST

### PATENT LITERATURE

Patent Literature 1: Japanese Unexamined Patent Application Publication No. 2021-110409

### SUMMARY OF INVENTION

In the meantime, there is room for improvement in the connection between the valve main body 12 and the electric motor 41, in the conventional electrically operated valves 71 and 81.

In particular, the connection member 72 fixing the electric motor 41 to the valve main body 12 includes a screw part and has a complicated shape. Thus, the connection member 72 is formed by a free-cutting material (for example, SUS303). On the contrary, a base member 75 formed by a material having an excellent weldability is interposed for a joint to the can 40, and both the members (the connection member 72 and the base member 75) are integrated by brazing. For this reason, the connection portion between the valve body 12 and the electric motor 41 requires a large number of parts and processes, which increases the manufacturing cost.

In the meantime, the connection member 72 and the base member 75 may be integrated as a pressed component which is excellent in mass productivity and advantageous in cost, and the screw part may be cut. However, in a case where the conventional connection member 72 is simply replaced with a pressed component, the following problem may be generated.

The pressed component is generally thin and may be insufficient in strength and generate deformation in a diametrical direction due to pressure fluctuation when the valve is used. On the other hand, seal members (a first seal member 73 and a second seal member 74 each consisting of an O-ring) are provided on the outer peripheral surface of the connection member 72 between an outer peripheral surface of the connection member 72 and the resin molded cover 56 (a leg part 56a) and the valve main body 12 (an inner peripheral surface of the connection opening 19), respectively. Therefore, if the connection member deforms in the diametrical direction, a compression rate of the seal members 73 and 74 (a pressing strength of the seal members 73 and 74 against the outer peripheral surface of the connection member, the inner peripheral surface of the resin molded cover 56 and the inner peripheral surface of the connection opening 19) will change, causing the refrigerant to leak from the valve chamber 13 or causing moisture or the outside air to enter the electric motor 41 or the valve chamber 13.

The problem as mentioned above cannot be solved even by the invention described in the patent literature 1 mentioned above.

Therefore, an object of the present invention is to make it possible to construct the connection member by a pressed component by solving the problem mentioned above, thereby improving a productivity of the electrically operated valve and reducing a manufacturing cost.

In order to solve the problem mentioned above and achieve the object, the electrically operated valve according to the present invention comprises a valve main body which has a valve chamber communicating with an inflow passage and an outflow passage in an inner part thereof, a valve body which moves forward and backward with respect to a valve seat formed within the valve chamber, an electric motor which has a rotor and a stator driving the valve body, a can which accommodates the rotor in an inner side thereof and arranges the stator in an outer side thereof, a connection member which connects the can and the valve main body, and a seal member which extends in such a manner as to surround the connection member and comes into contact with an outer peripheral surface of the connection member and an inner peripheral surface of a housing of the stator in a pressing state, wherein the connection member is formed by press working, and has a tubular part, a rigid component is fitted and inserted into the tubular part, and the tubular part, the rigid component and the seal member are arranged in such a manner as to overlap each other in an axial direction of the electrically operated valve.

In the electrically operated valve according to the present invention, the connection member connecting the can (the sealed container) and the valve main body is constructed by a pressed component which is formed by the press working. Thus, in the present invention, the rigid component is fitted and inserted (for example, press fitted) to the tubular part of the connection member, and the tubular part, the rigid component and the seal member overlap each other in the axial direction of the electrically operated valve.

Here, "rigid component" is a component which is hard to be deformed in a diametrical direction even when an external force is applied. By fitting the rigid component as mentioned above to the connection member, it is possible to enhance the strength of the connection member (the tubular part) corresponding to the pressed component, and inhibit or suppress the deformation in the diametrical direction. Therefore, according to the present invention, it is possible to stabilize (keep constant) a compression rate in the diametrical direction of the seal member which is disposed in such a manner as to surround the tubular part, and it is possible to prevent the moisture from infiltrating into the electric motor from the external part.

The structure "the tubular part, the rigid component and the seal member are arranged in such a manner as to overlap each other in the axial direction of the electrically operated valve" mentioned above means that the seal member is arranged in an outer peripheral surface of a portion of the tubular part to which the rigid component is fitted and inserted. In other words, when viewing from a direction orthogonal to the axial direction of the electrically operated valve (which also corresponds to a diametrical direction of the tubular part), the tubular part, the rigid component and the seal member are configured to have a portion where they overlap.

Describing further the rigid component, the component is typically a thick component (cut component) manufactured by cutting work. However, the object of the present invention can be achieved as long as the rigidity suppressing the deformation of the tubular part is provided. Therefore, any component manufactured by the other methods may be employed without being restricted to the cut component. Further, the kind (use and function) of the rigid component is not restricted. In an embodiment mentioned later, a screw bearing constructing a transmission mechanism (a feed screw mechanism) is fitted and inserted as the rigid component according to the present invention to the connection member. However, the object of the present invention can be achieved similarly as long as the rigidity suppressing the deformation of the tubular part is provided. Therefore, any component or a part thereof having the other use and function provided in the electrically operated valve may be employed.

In the present invention, each of the following aspects (1) to (5) can be preferably employed.
(1) The valve main body has a connection opening to which the connection member is fixed, and the tubular part has an insertion part which is inserted (for example, plugged or screwed) into the connection opening to be arranged within the connection opening, a protruding part which protrudes to the electric motor side from the connection opening, and a flange part which expands outward from the protruding part so as to face the valve main body at intervals, and the seal member is further arranged between the valve main body and the flange part and comes into contact with the valve main body and the flange part in a pressing state. The connection opening is formed in a surface (an electric motor placing surface) of the valve main body in which the electric motor is placed installed.
   In the present invention mentioned above, the seal member achieves a function of preventing moisture from entering the electric motor (corresponding to the second sealing function of the conventional electrically operated valve) by coming into contact with the outer peripheral surface of the connection member and the inner peripheral surface of the housing of the electric motor in the pressing state. In addition to this, according to the aspect (1) mentioned above, it is possible to achieve a function of preventing the refrigerant from leaking out of the valve chamber through a portion between the inner peripheral surface of the connection opening and a fitting insertion part or preventing outside air or moisture from entering into the valve chamber from the external part (corresponding to the first sealing function of the conventional electrically operated valve) by sealing the portion between the flange part and the valve main body facing the valve main body. Therefore, according to the aspect (1), the number of the seal member is set to one (one seal member can be used as the first seal member and the second seal member in the conventional electrically operated valve), and it is possible to reduce the number of parts and the manufacturing man hour in comparison with the conventional electrically operated valve.
(2) In the aspect (1) mentioned above, the can is configured to be fixed (for example, joined by welding) to the flange part. By fixing the can to the flange part as mentioned above, the conventionally used base member can be omitted, and it is possible to further reduce the number of parts and the manufacturing man hour in comparison with the conventional electrically operated valve.
(3) In the aspect (1) mentioned above, the connection opening has a female screw in an inner peripheral surface thereof, the insertion part is provided with a male screw screwed into the female screw in an outer peripheral surface thereof and is fixed to the valve main body by being screwed into the connection opening, and the connection opening has a stopper part against which the insertion part, which is screwed into the connection opening and moves forward in a depth direction of the connection opening, is abutted and stopped. Thus, when the insertion part is abutted against the stopper part, the seal member comes into contact with the valve main body and the flange part in a pressed state.
   According to the aspect (3) as mentioned above, it is possible to accurately set a compression rate of the seal member with regard to the axial direction of the electrically operated valve (a pressing strength to the flange part and the valve main body surface facing the flange part).
(4) In any of the present invention or the aspects (1) to (3) mentioned above, the seal member has a convex part coming into contact with the inner peripheral surface of the housing of the stator in an outer peripheral surface thereof. This is because of enhancing the sealing effect of the seal member (the second sealing function).
(5) In any of the present invention or the aspects (1) to (3) mentioned above, the connection member has a valve body guide part which is integrally formed with the tubular part by the press working and supports the valve body so as to be movable forward and backward with respect to the valve seat.

According to the aspect (5) as mentioned above, it is possible to add the function of supporting the valve body to the connection member. It is possible to reduce the number of parts and the manufacturing man hour in comparison with the electrically operated valve which is provided with the valve body guide member as an independent component. The above description "supporting the valve body" about the valve body guide part does not mean only directly supporting the valve body, but is a concept including indirectly supporting via the other member or portion (for example, via a valve shaft as in a third embodiment mentioned later).

According to the present invention, it is possible to form the connection member connecting the electric motor to the valve main body as a pressed component, and it is possible to improve a productivity of the electrically operated valve and reduce the manufacturing cost.

The other objects, features and advantages of the present invention are apparent from the following description of embodiments according to the present invention which is given on the basis of the accompanying drawings. It is apparent for a person skilled in the art that the present invention is not limited to the following embodiments, but can be variously changed within the scope of the invention described in claims. Further, in each of the drawings, same reference numerals denote the same or corresponding portions.

### BRIEF DESCRIPTION OF DRAWINGS

[Fig. 1] Fig. 1 is a vertical cross sectional view showing an electrically operated valve (in a valve closed state) according to a first embodiment of the present invention.
[Fig. 2] Fig. 2 is a vertical cross sectional view showing the electrically operated valve (in a valve opened state) according to the first embodiment.
[Fig. 3] Fig. 3 is a vertical cross sectional view showing a state in which a connection member of the electrically operated valve according to the first embodiment is formed by press working.
[Fig. 4] Fig. 4 is a vertical cross sectional view showing a state in which the connection member of the electrically operated valve according to the first embodiment is finished by cutting work after being formed by the press working.
[Fig. 5] Fig. 5 is a vertical cross sectional view showing an electrically operated valve (in a valve closed state) according to a second embodiment of the present invention.
[Fig. 6] Fig. 6 is a vertical cross sectional view showing a state in which a connection member of the electrically operated valve according to the second embodiment is formed by press working.
[Fig. 7] Fig. 7 is a vertical cross sectional view showing a state in which the connection member of the electrically operated valve according to the second embodiment is finished by cutting work after being formed by the press working.
[Fig. 8] Fig. 8 is a vertical cross sectional view showing an electrically operated valve (in a valve closed state) according to a third embodiment of the present invention.
[Fig. 9] Fig. 9 is a vertical cross sectional view showing a state in which a connection member of the electrically operated valve according to the third embodiment is formed by press working.
[Fig. 10] Fig. 10 is a vertical cross sectional view showing a state in which the connection member of the electrically operated valve according to the third embodiment is finished by cutting work after being formed by the press working.
[Fig. 11] Fig. 11 is a vertical cross sectional view showing one example of a conventional electrically operated valve (in a valve closed state).
[Fig. 12] Fig. 12 is a vertical cross sectional view showing the other example of the conventional electrically operated valve (in a valve closed state.

### DESCRIPTION OF EMBODIMENTS

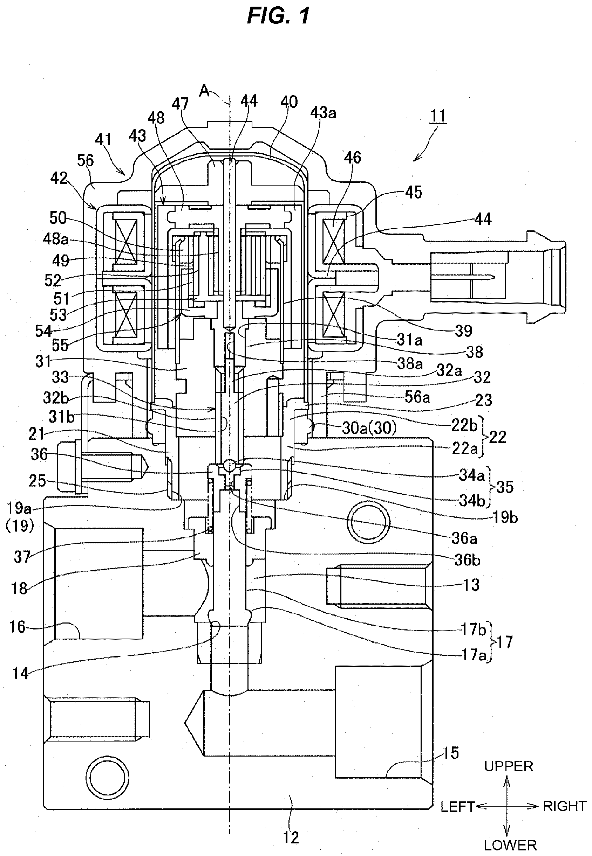

A description will be given of an electrically operated valve according to an embodiment of the present invention with reference to Figs. 1 to 10. Each of the drawings appropriately shows two-dimensional coordinates which represent an up-and-down direction and a lateral direction and are orthogonal to each other, and the following description will be given on the basis of these directions. However, the electrically operated valve according to the present invention and each of the present embodiments can be used in various directions, each of the directions are provided for convenience, and structures of respective parts of the present invention are not limited by these directions. Further, the terms "vertical" and "horizontal" may be used, the vertical direction coincides with the up-and-down direction, and a direction orthogonal to the vertical direction is a horizontal direction including the lateral direction.

### [First Embodiment]

As shown in Figs. 1 to 4, an electrically operated valve 11 according to a first embodiment of the present invention is provided with a valve main body 12 which has a valve chamber 13 in an inner part and has an inflow passage 15 allowing the refrigerant to flow into the valve chamber 13 and an outflow passage 16 allowing the refrigerant to flow out of the valve chamber 13, a valve seat 14 which is formed in an opening part of the inflow passage 15 to the valve chamber 13, a valve body 17 which changes a passing amount (a flow rate) of the refrigerant by moving forward and backward (moving up and down) with respect to the valve seat 14, a valve body guide member 18 which is disposed in such a manner as to close an upper surface of the valve chamber 13 and supports the valve body 17 so as to be movable up and down, an electric motor 41 which drives the valve body 17, a speed reduction mechanism (a paradox planetary gear speed reduction mechanism) 55 which reduces the rotation of the electric motor 41, a transmission mechanism 33 which converts the reduced rotary motion to a linear motion to transmit to the valve body 17, a connection member 21 which connects the electric motor 41 and the valve main body 12, and a can (a sealed container) 40 which is covered and not bottomed (is opened in a bottom surface and is closed in a top surface), has a cylindrical shape and forms a sealed space in an upper surface of the valve main body 12 together with the connection member 21.

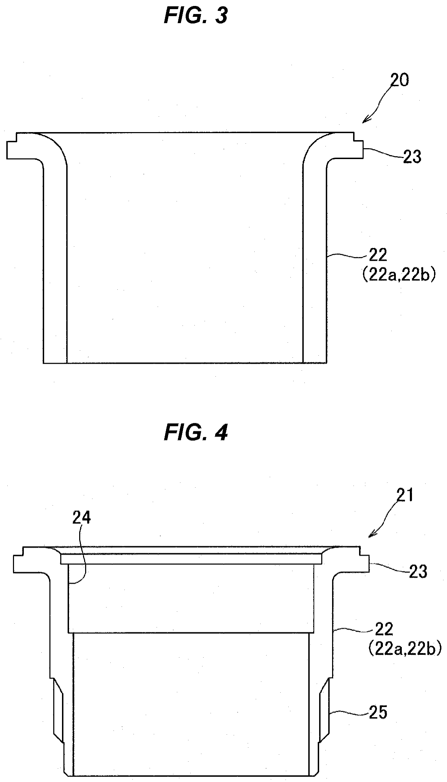

The connection member 21 connecting the electric motor 41 and the valve main body 12 is produced by applying a necessary cutting work after forming an entire shape of the member 21 by press working. In particular, a not-bottomed and not-covered cylindrical member 20 is formed by press working, the cylindrical member 20 including a tubular part 22 having a cylindrical shape as shown in Fig. 3, and a flange part 23 expanding horizontally to an outer side from an upper end of the tubular part 22. Thereafter, for the cylindrical member 20, as shown in Fig. 4, a ring-shaped expansion part 24 for press fitting a screw bearing 31 (mentioned later) corresponding to a rigid component according to the present invention is formed in an inner side of the upper end part of the cylindrical member 20 by cutting work, and a male screw 25 is formed in an outer peripheral surface of a lower end part of the tubular part 22.

In the meantime, the connection opening 19 receiving the connection member 21 (the tubular part 22) is formed in the upper surface (the electric motor placing surface) of the valve main body 12 in which the electric motor 41 is placed, and a female screw 19a screwed into the male screw 25 is formed in an inner peripheral surface of the connection opening 19. Further, a step part 19b against which the connection member 21 (the tubular part 22) is butted is formed in the connection opening 19. The connection member 21 is screwed into the connection opening 19 while the male screw 25 in the outer peripheral surface thereof is screwed into the female screw 19a in the inner peripheral surface of the connection opening 19, however, is stopped by the lower end of the tubular part 22 being butted against the step part 19b, and is fixed to the valve main body 12. Further, in this fixed state, a whole of the tubular part 22 is not inserted to the connection opening 19, but the upper part of the tubular part 22 comes to a state in which it protrudes upward from the connection opening 19.

In the tubular part 22, a portion 22a arranged in (inserted to) the inner part of the connection opening 19 is called as "insertion part", and a portion 22b protruding upward from the connection opening 19 is called as "protruding part", respectively. Further, the connection member 21 is fixed to the valve main body 12 such that the protruding part 22b is formed. As a result, a gap is formed between the flange part 23 and the upper surface of the valve main body 12, and a seal member 20 (mentioned later) is arranged in this gap.

The electric motor 41 is constructed by the stepping motor including the stator 42 which is arranged in the outer side of the can 40, the rotor 43 which is arranged rotatably in the inner side of the can 40, and the resin molded cover (the housing) 56 which covers the can 40 and the stator 42. The resin molded cover 56 has in a lower end part thereof a cylindrical leg part 56a which surrounds the protruding part 22b and the flange part 23 of the connection member 21 at a fixed interval.

Further, a seal member 30 is provided in such a manner as to be interposed between an inner peripheral surface of the leg part 56a and an outer peripheral surface of the protruding part 22b, and interposed between a lower surface of the flange part 23 and an upper surface of the valve main body 12. The seal member 30 is a ring-shaped resin member having an elasticity, and is provided with a ring-shaped convex part 30a which extends over a whole periphery of the member 30 so as to protrude outward from the outer peripheral surface of the member 30. For placing, the seal member 30 may be arranged in the outer peripheral surface of the tubular part 22 so as to be sandwiched between the flange part 23 and the upper surface of the valve main body 12 when screwing the connection member 21 into the connection opening 19.

A height dimension (a dimension in the up-and-down direction) of the seal member 30 is set to be greater than a distance between the flange part 23 and the upper surface of the valve main body 12 when the connection member 21 is fixed to the connection opening 19 (when the lower end of the tubular part 22 butts against the step part 19b). As a result, when the lower end of the connection member 21 (the tubular part 22) screwed into the connection opening 19 butts against the step part 19b to be stopped as mentioned above, the seal member 30 is sandwiched by the flange part 23 and the valve main body 12, thereby being crushed (compressed) at a predetermined (previously designed) compression rate. Thus, it is possible to seal between the flange part 23 and the upper surface of the valve main body 12, and it is possible to prevent the refrigerant from leaking out to the external part from the valve chamber 13 and prevent the outside air from infiltrating into the valve chamber 13 from the external part. More specifically, the first sealing function can be obtained.

Further, in the same manner as the height dimension, a thickness dimension (a dimension in the horizontal direction) of the seal member 30, that is, a distance between an inner peripheral surface of the seal member 30 being in contact with the outer peripheral surface of the tubular part 22 and a leading end of the convex part 30a, is set to be greater than a distance between an inner peripheral surface of the leg part 56a of the resin molded cover 56 and an outer peripheral surface of the tubular part 22 (the protruding part 22b). Therefore, when the resin molded cover 56 including the stator 42 in an inner part thereof is mounted so as to put on the can 40, the convex part 30a of the seal member 30 is pressed against the inner peripheral surface of the leg part 56a of the resin molded cover 56, and the inner peripheral surface of the seal member 30 is simultaneously pressed against the outer peripheral surface of the tubular part 22 (the protruding part 22b). Thus, it is possible to seal between the tubular part 22 (the protruding part 22b) and the leg part 56a of the resin molded cover 56, and it is possible to prevent moisture from entering into the inner part (into the resin molded cover) of the electric motor 41 from the external part. More specifically, the second sealing function can be obtained.

As mentioned above, according to the present embodiment, one seal member 30 can be used as the conventionally provided two seal members (the first seal member 73 and the second seal member 74), and it is possible to reduce the number of parts and the man hour for manufacturing.

The seal member 30 according to the present embodiment has both the first sealing function and the second sealing function, however, a seal member (a member for sealing between the protruding part 22b and the leg part 56a) having only the second sealing function may be used at a position of the seal member 30. In this case, it is necessary to separately use a seal member having the first sealing function. Therefore, for example, it is possible to use a seal member (a second seal member) for sealing the outer peripheral surface of the connection member 21 and the inner peripheral surface of the connection opening 19 of the valve main body 12, in a state in which the connection member 21 is attached to the valve main body 12 (same applies to a second embodiment and a third embodiment mentioned later).

The can 40 is joined to the upper surface of the flange part 23. In the present embodiment, the connection member 21 is provided with the flange part 23 having the same ring-shaped form as the conventionally used base member 75 (refer to Fig. 11), and the base member 75 is accordingly not required.

The stator 42 arranged in the outer side of the can 40 includes a yoke 44, and a coil 46 in which a winding wire is applied to a bobbin 45. In the meantime, the rotor 43 arranged in the inner side of the can 40 is constructed by integrally connecting a cylindrical rotor member 43a made of a magnetic material (a permanent magnet) and a sun gear member 48 made of a resin material.

A shaft 44 is inserted into a center part of the sun gear member 48, and an upper part of the shaft 44 is supported by a support member 47 which is arranged in an inner side of a top part of the can 40.

A sun gear 48a of the sun gear member 48 engages with a plurality of planetary gears 49 which are rotatably supported to a shaft 52 disposed in a carrier 53 mounted on a bottom surface of an output gear 54. An upper part of the planetary gear 49 engages with an annular ring gear (an internal tooth fixing gear) 50 which is attached to an upper part of a cylindrical member 39 fixed to an upper part of a screw bearing 31 (mentioned later), and a lower part of the planetary gear 49 engages with an internal tooth gear 51 of the annular output gear 54. The number of teeth of the ring gear 50 and the number of teeth of the internal tooth gear 51 of the output gear 54 are set to be slightly different number of teeth. As a result, the rotating speed of the sun gear 48a is decelerated with a great reduction ratio to be transmitted to the output gear 54. These gear mechanisms (the sun gear 48a, the planetary gear 49, the ring gear 50 and the output gear 54) construct a speed reduction mechanism (a paradox planetary gear speed reduction mechanism) 55 which decelerates the rotation of the stepping motor 41 mentioned above.

The cylindrical screw bearing 31 is fixed to the upper part of the connection member 21 by press fitting to the expansion part 24 so as to abut against the lower end of the expansion part 24 (inserting the screw bearing 31 into the tubular part 22 in a state in which the tubular part 22 is pressed to an expanding direction by the screw bearing 31). The screw bearing 31 is a cylindrical member having a comparatively large thickness, and can enhance the strength of the connection member 21 having a comparatively small thickness by press fitting the rigid component as mentioned above and suppress the deformation in the diametrical direction.

Therefore, according to the present embodiment, it is possible to prevent the compression rate of the seal member 30 from changing due to the deformation of the connection member 21 in the diametrical direction caused by the pressure fluctuation when using the valve and prevent the matter that the sealing performance is lowered from occurring. Further, the can 40 is joined to the connection member 21 (the flange part 23). As a result, it is possible to prevent the diameter of the flange part 23 from changing due to the diameter change of the tubular part 22, and prevent the matter that the rotor 43 scrapes against the inner peripheral surface of the can 40 due to the change in the inner diameter of the can 40 to block the rotation from occurring.

The output gear 54 is slidably in contact with the upper surface of the screw bearing 31. Further, an upper part of a stepped cylindrical output shaft 38 is press fitted to the center of the bottom part of the output gear 54, and a lower part of the output shaft 38 is rotatably inserted into a fitting insertion hole 31a which is formed in the center part of the upper surface of the screw bearing 31. Further, a lower end part of the shaft 44 is fitted to the upper part of the output shaft 38 so as to be relatively rotatable.

A female screw part 31b is formed in a lower part of a center part of the screw bearing 31, and a male screw part 32b formed in an outer peripheral surface of a screw drive member 32 is screwed into the female screw part 31b. The screw bearing 31 (the female screw part 31b) and the screw drive member 32 (the male screw part 32b) construct the transmission mechanism (the feed screw mechanism) which converts the rotary motion supplied from the stepping motor 41 via the speed reduction mechanism 55 into the linear motion to the up-and-down direction to transmit to the valve body 17.

Here, the output gear 54 performs a rotary motion at a fixed position in the up-and-down direction without moving up and down, and the rotary motion of the output gear 54 is transmitted to the screw drive member 32 side by inserting a plate-like part 32a disposed in the upper end part of the screw drive member 32 and has a flat driver shape into a fitting groove 38a disposed in the lower end part of the output shaft 38 connected to the output gear 54 and has a slit shape. The plate-like part 32a disposed in the screw drive member slides in the up-and-down direction within the fitting groove 38a of the output shaft 38. As a result, when the output gear 54 (the rotor 43) rotates, the screw drive member 32 linearly moves in the up-and-down direction by the feed screw mechanism 33 despite that the output gear 54 does not move in the up-and-down direction.

The linear motion of the screw drive member 32 is transmitted to the valve body 17 via a ball-like joint 35 which is constructed by a ball 34a and a ball receiving seat 34b, and a spring receiving member 36. The valve body 17 is constructed by a valve body main body part 17a which comes into contact with and separates from the valve seat 14, and a stepped columnar valve body support part 17b which rises upward from a center part of an upper surface of the valve body main body part 17a, and the spring receiving member 36 and the valve body 17 (the valve body support part 17b) are connected by fitting and inserting the upper end part of the valve body support part 17b to a fitting hole (a lower surface fitting hole) 36b which is formed in a center part of a lower surface of the spring receiving member 36. Further, a fitting hole (an upper surface fitting hole) 36a is also provided in a center part of an upper surface of the spring receiving member 36, and the ball receiving seat 34b is fitted into the upper surface fitting hole 36a.

Further, the valve body guide member 18 is fixed to a bottom surface of connection opening 19 in the upper surface of the valve main body, thereby closing the upper surface of the valve chamber 13. A stepped through hole is formed in the center part of the valve body guide member 18 which is fixed to the upper part of the valve chamber 13, the stepped through hole allowing the valve body support part 17b to pass through so as to be slidable up and down and placing a compression coil spring 37 therein. Further, the compression coil spring 37 is disposed between a step part in the upper part of the through hole and the spring receiving member 36. The compression coil spring 37 is configured to energize the valve body 17 to an upper side which is a valve opening direction, and it is possible to more securely perform the valve opening motion by applying an energizing force of the coil spring 37 to the valve body 17 in addition to the drive force of the electric motor 41 when opening the valve.

In the present embodiment, respective axis lines of the valve body 17, the valve seat 14, the valve body guide member 18, the connection member 21, the screw bearing 31, the screw drive member 32, the output shaft 38, the shaft 44 and the rotor 43 coincide with the axis line A of the electrically operated valve 11 extending vertically in the up-and-down direction.

A description will be given as following of the motion of the electrically operated valve 11 according to the present embodiment.

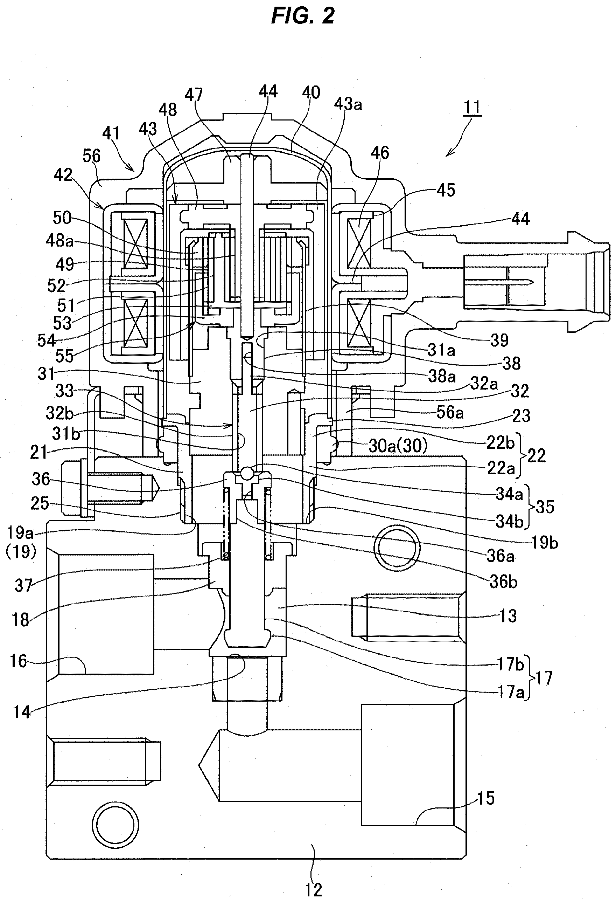

When an electric current is supplied to the stator 42 (the coil 46) in such a manner that the rotor 43 rotates in one direction from the valve closed state shown in Fig. 1, the rotation of the rotor 43 is converted into the linear motion by the feed screw mechanism 33, and the screw drive member 32 is pulled upward. In association therewith, the spring receiving member 36 pressed against the lower surface of the screw drive member 32 via the ball-like joint 35 by the energizing force of the compression coil spring 37, and the valve body support part 17b connected to the spring receiving member 36 are pulled upward, the valve body main body part 17a is separated from the valve seat 14, and the refrigerant flowing into from the inflow passage 15 flows out of the outflow passage 16 through the valve chamber 13 (refer to Fig. 2). The passing amount of the refrigerant (the refrigerant flow rate) in this valve opened state can be adjusted by the amount of rotation of the rotor 43.

On the contrary, when the electric current is supplied to the stator 42 (the coil 46) in such a manner that the rotor 43 rotates in a reverse direction to the one direction from the valve opened state, the rotation of the rotor 43 is converted into the linear motion by the feed screw mechanism 33, and the screw drive member 32 moves downward. In association with this downward moving motion, the ball-like joint 35, the spring receiving member 36 and the valve body 17 move downward. When the valve body main body part 17a comes into contact with the valve seat 14, the flow passage between the inflow passage 15 and the outflow passage 16 is blocked, thereby forming the valve closed state (refer to Fig. 1).

### [Second Embodiment]

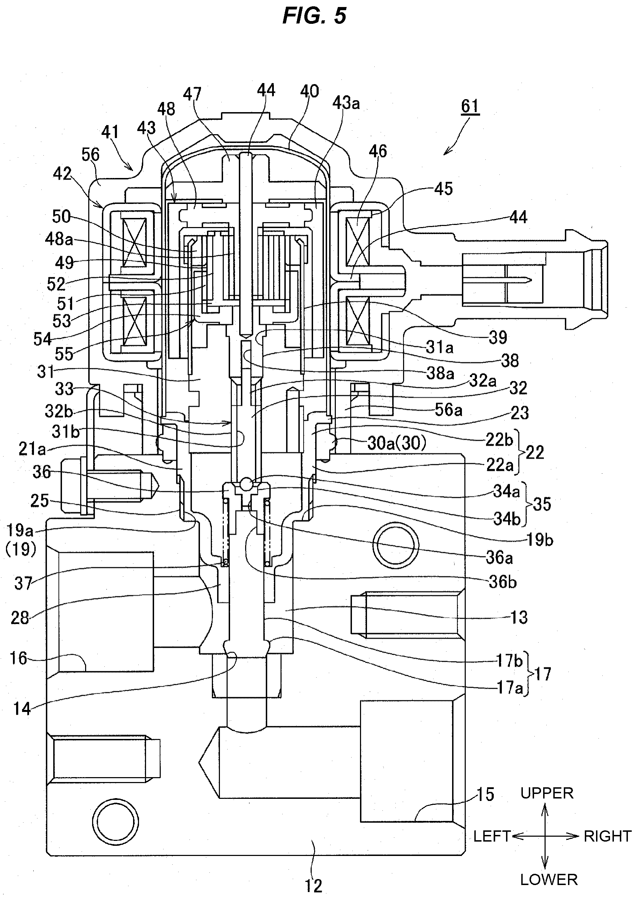

A description will be given of an electrically operated valve according to a second embodiment of the present invention with reference to Figs. 5 to 7. The same reference numerals are used for the same components as those of the electrically operated valve according to the first embodiment, duplicated explanation will be omitted. The following description will focus on the different points.

As shown in Figs. 5 to 7, an electrically operated valve 61 according to the second embodiment of the present invention is different from the first embodiment in a point that the connection member 21 and the valve body guide member 18 in the first embodiment are constructed as an integral component (a connection member 21a provided with the valve body guide part 28).

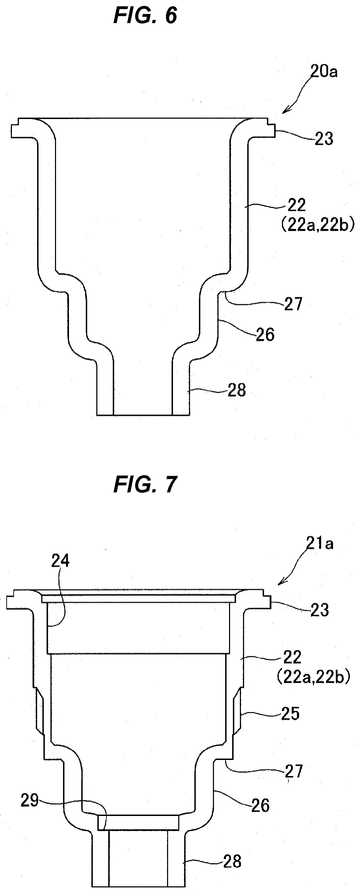

In particular, the connection member 21a is produced by forming a whole shape thereof by press working and thereafter applying a necessary cutting work in the same manner as the first embodiment. However, as shown in Fig. 6, the cylindrical member 20a formed by the press working is provided with a reduced diameter part 26 which extends downward from a lower end of the tubular part 22, and a valve body guide part 28 which extends downward from a lower end of the reduced diameter part 26, in addition to the tubular part 22 and the flange part 23 which are the same as the first embodiment.

Further, the reduced diameter part 26 has a smaller diameter than the tubular part 22. Thus, a step part 27 is formed between the tubular part 22 and the reduced diameter part 26. The step part 27 performs a function for setting the compression rate of the seal member 30 in the up-and-down direction to an appropriate value by butting against the step part 19b which is formed in the inner peripheral surface of the connection opening 19, in the same manner as the lower end of the tubular part 22 in the first embodiment. The step part 27 is applied a process of forming a lower surface butted against the step part 19b flat when performing a cutting work mentioned next (refer to Fig. 7). Further, the valve body guide part 28 performs a function for supporting the valve body 17 (the valve body support part 17b) so as to be movable up and down, in the same manner as the valve body guide member 18 (refer to Fig. 1).

After forming the cylindrical member 20a, the expansion part 24 is formed in the upper end part of the tubular part 22, and the male screw 25 is formed in the outer peripheral surface of the lower end part of the tubular part 22, respectively by cutting work, as shown in Fig. 7. The expansion part 24 and the male screw 25 have the same functions as the first embodiment. Further, in the present embodiment, a flat spring receiving surface 29 is formed by cutting work in an upper end (a boundary part between the reduced diameter part 26 and the valve body guide part 28) of the valve body guide part 28, in such a manner as to receive the compression coil spring 37.

According to the present embodiment, the valve body guide member 18 can be integrally formed as the valve body guide part 26 formed in the lower end of the connection member 21a in the connection member 21a. Accordingly, it is possible to further reduce the number of parts and the man hour for manufacturing in comparison with the first embodiment.

### [Third Embodiment]

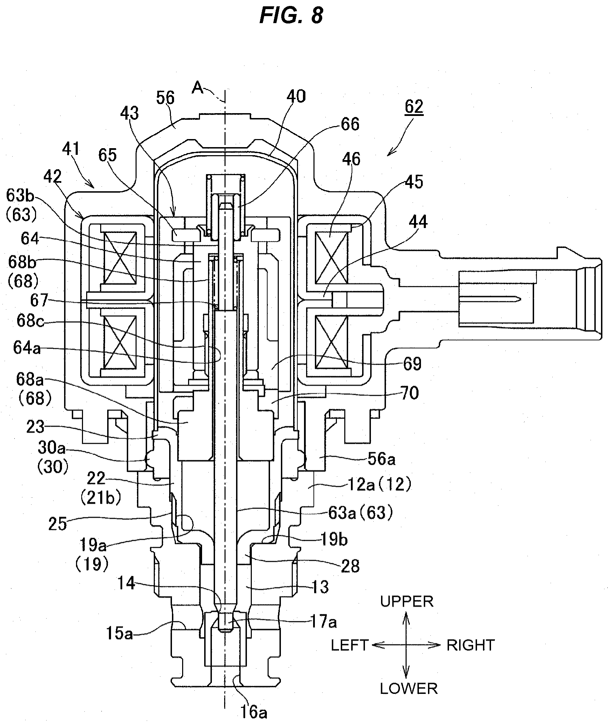

A description will be given of an electrically operated valve according to a third embodiment of the present invention with reference to Figs. 8 to 10. The same reference numerals are used for the same components as those of the electrically operated valve according to the first embodiment and the second embodiment, duplicated explanation will be omitted. The following description will focus on the different points.

As shown in Figs. 8 to 10, an electrically operated valve 62 according to the present embodiment is configured to adjust the flow rate of the refrigerant by amoving up and down the valve body 17a by means of the electric motor (the stepping motor) 41 in the same manner as the first embodiment, however, is provided with a rod-like valve shaft 63 which extends in the up-and-down direction from the inner part of the rotor 43 to the valve chamber 13 along the axis line A and has the valve body 17a in a lower end thereof, and has a structure in which the vale body 17a (the valve shaft 63) is connected to the rotor 43 without any speed reduction mechanism (paradox planetary gear speed reduction mechanism).

In more detail, the valve shaft 63 has a columnar trunk part 63a, and an upper small-diameter part 63b which is coaxially formed in series with the trunk part 63a in the upper end part of the trunk part 63a. Further, the valve body 17a is integrally disposed in a lower end of the valve shaft 63 (the trunk part 63a). The rotor 43 is arranged in such a manner as to be rotatable to the inner side of the can 40 and be movable in the up-and-down direction, and the valve is opened and closed by the integral movement in the up-and-down direction of the valve shaft 63 provided with the valve body 17a in the lower end and the rotor 43.

A valve shaft holder 64 is disposed in an inner side of the rotor 43. The valve shaft holder 64 has a cylindrical shape in which an upper end is closed, and a support ring 65 is fixed by caulking to an upper end part of the valve shaft holder 64. Further, the rotor 43 and the valve shaft holder 64 are integrally connected via the support ring 65. A female screw part 64a is formed in an inner peripheral surface of the valve shaft holder 64. The female screw part 64a constructs a transmission mechanism (a feed screw mechanism) which is screwed into a male screw part 68c of a guide bush 68 mentioned later to convert the rotation of the electric motor 41 into a linear motion and transmit to the valve shaft 63.

The upper small-diameter part 63b of the valve shaft 63 passes through the valve shaft holder 64, and a push nut 66 for retaining is attached to an upper end part of the upper small-diameter part 63b. The valve shaft 63 is energized downward by a compression coil spring 67 which is disposed between the valve shaft holder 64, and a step part between the trunk part 63a and the upper small-diameter part 63b in the valve shaft 63. Therefore, the valve shaft 63 is controlled its relative movement in the up-and-down direction with respect to the valve shaft holder 64 by the push nut 66 and the compression coil spring 67, and moves up and down together with the valve shaft holder 64.

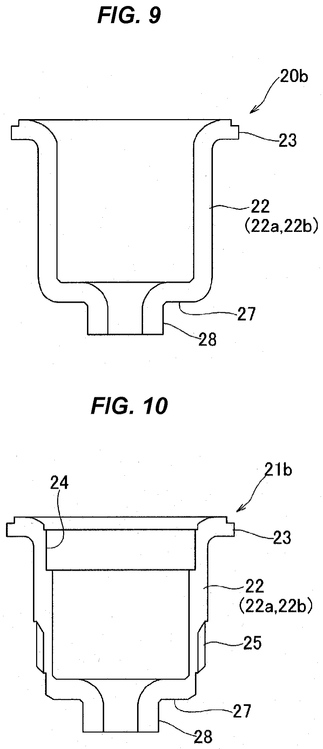

The connection member 21b is produced by forming a whole shape thereof by press working and thereafter applying a necessary cutting work similar to the first embodiment and the second embodiment. As shown in Fig. 9, the cylindrical member 20b formed by press working includes the tubular part 22 and the flange part 23 similar to those of the first embodiment, and also includes the valve body guide part 28 similar to the second embodiment. The valve body guide part 28 is formed in a lower part of the tubular part 22, and supports the valve shaft 63 so as to be movable up and down. Further, the valve body guide part 28 has a smaller diameter than the tubular part 22, the step part 27 is formed between the tubular part 22 and the valve body guide part 28, and the step part 27 can be butted against the step part 19b of the connection opening 19. Further, according to the present embodiment, the valve body guide part 28 is integrally provided in the connection member 21b. Therefore, it is possible to reduce the number of parts and the man hour for manufacturing in comparison with the first embodiment.

After forming the cylindrical member 20b, the expansion part 24 is formed in the inner side of the upper end part of the tubular part 22, and the male screw 25 is formed in the outer peripheral surface of the lower end part of the tubular part, respectively by cutting work as shown in Fig. 10. The expansion part 24 and the male screw 25 have the same functions as those of the first embodiment and the second embodiment.

The guide bush 68 corresponding to the rigid component according to the present invention is press fitted to the expansion part 24 of the connection member 21b. The guide bush 68 has a large-diameter cylinder part 68a which has a larger outer diameter, and a small-diameter cylinder part 68b which is coaxially formed in an upper part of the large-diameter cylinder part 68a in series with the large-diameter cylinder part 68a and has a smaller outer diameter. A male screw part 68c screwed with the female screw part 64a of the valve shaft holder 64 is formed in an outer peripheral surface of the small-diameter cylinder part 68b.

Further, an upper stopper body 69 is disposed in the valve shaft holder 64, and a lower stopper body 70 is disposed in the large-diameter cylinder part 68a of the guide bush 68. The stopper bodies 69 and 70 are configured to determine a lower limit position of the valve shaft holder 64. When the valve shaft holder 64 rotates to move down to the lower limit position, the upper stopper body 69 comes into contact with the lower stopper body 70 to control further rotation of the valve shaft holder 64.

Further, according to the present embodiment, the valve main body 12 is constructed by a main body part 12a which has the valve chamber 13 in an inner part and is fixed by the screwing of the connection member 21b, and a flow passage block (not shown) which is provided with an inflow passage and an outflow passage in an inner part and is fixed by the screwing of the main body part 12a. The inflow hole 15a and the outflow hole 16a provided in the main body part 12a so as to communicate with the valve chamber 13 respectively communicate with the inflow passage and the outflow passage of the flow passage block when the main body part 12a is screwed into the flow passage block. The seal member 30 has the same structures and functions as those of the first embodiment and the second embodiment.

A description will be given below of a motion of the electrically operated valve 62 according to the present embodiment.

When the electric current is supplied to the stator 42 (the coil 46) such that the rotor 43 rotates in one direction from the valve closed state shown in Fig. 8, the valve shaft holder 64 connected to the rotor 43 rotates together with the rotor 43. The female screw part 64a screwed with the male screw part 68c formed in the outer peripheral surface of the small-diameter cylinder part 68b of the guide bush 68 is formed in the inner peripheral surface of the valve shaft holder 64. Therefore, the rotation of the rotor 43 (the valve shaft holder 64) is converted into the linear motion in the up-and-down direction due to a mutual action of the male screw part 68c and the female screw part 64a, and the valve shaft holder 64 moves upward. As a result, the rotor 43 connected to the valve shaft holder 64, and the valve shaft 63 controlled its relative movement to the valve shaft holder 64 also move upward together with the valve shaft holder 64. In association with the upward movement of the valve shaft 63, the valve body 17a disposed in the lower end of the valve shaft 63 is separated from the valve seat 14, and the refrigerant flowing into from the inflow passage flows out of the outflow passage through the valve chamber 13. The passing amount of the refrigerant (the refrigerant flow rate) can be adjusted by the amount of rotation of the rotor 43.

On the contrary, when the electric current is supplied to the stator 42 (the coil 46) such that the rotor 43 rotates in a reverse direction to the one direction from the valve opened state, the rotation of the rotor 43 is converted into the linear motion in the up-and-down direction by the mutual action of the female screw part 64a and the male screw part 68c, and the valve shaft holder 64 moves downward together with the rotor 43 and the valve shaft 63. Thus, the valve body 17a moves down toward the valve seat 14, and comes to the valve closed state shown in Fig. 8 when the valve body 17a comes into contact with the valve seat 14.

### REFERENCE SIGNS LIST

A axis line (center axis line)
11, 61, 62, 71, 81 electrically operated valve
12 valve main body
12a main body part of valve main body
13 valve chamber
14 valve seat
15 inflow passage
15a inflow hole
16 outflow passage
16a outflow hole
17, 17a valve body
17b valve body support part
18 valve body guide member
19 connection opening
19a female screw
19b step part
20, 20a, 20b cylindrical member
21, 21a, 21b, 72 connection member
22 tubular part
22a insertion part
22b protruding part
23 flange part
24 expansion part
25 male screw
26 reduced diameter part
27 step part
28 valve body guide part
29 spring receiving surface
30 seal member
30a convex part
31 screw bearing
31a fitting insertion hole
31b female screw part
32 screw drive member
32a plate-like part
32b male screw part
33 transmission mechanism (feed screw mechanism)
34a ball
34b ball receiving seat
35 ball-like joint
36 spring receiving member
37, 67 compression coil spring
38 output shaft
38a fitting groove
39 cylindrical member
40 can (sealed container)
41 electric motor (stepping motor)
42 stator
43 rotor
43a rotor member
44 yoke
45 bobbin
46 coil
47 support member
48 sun gear member
48a sun gear
49 planetary gear
50 ring gear (internal tooth fixing gear)
51 internal tooth gear
52 shaft
53 carrier
54 output gear
55 speed reduction mechanism (paradox planetary gear speed reduction mechanism)
56 resin molded cover (housing of stator)
56a cylindrical leg part
3 valve shaft
63a trunk part
63b upper small-diameter part
64 valve shaft holder
64a female screw part
65 support ring
66 push nut
68 guide bush
68a large-diameter cylinder part
68b small-diameter cylinder part
68c male screw part
69 upper stopper body
70 lower stopper body
73 first seal member
74 second seal member
75 base member

## Claims

1. An electrically operated valve comprising:
a valve main body which has a valve chamber communicating with an inflow passage and an outflow passage in an inner part thereof;
a valve body which moves toward and away from a valve seat formed within the valve chamber;
an electric motor having a rotor and a stator which drive the valve body;
a can which accommodates the rotor in an inner side thereof and arranges the stator in an outer side thereof;
a connection member which connects the can and the valve main body; and
a seal member which extends to surround the connection member and comes into contact with an outer peripheral surface of the connection member and an inner peripheral surface of a housing of the stator in a pressed state,
wherein the connection member is formed by press working, and has a tubular part,
wherein a rigid component is fitted and inserted into the tubular part, and
wherein the tubular part, the rigid component and the seal member are arranged to overlap each other in an axial direction of the electrically operated valve.

2. The electrically operated valve according to claim 1, wherein the valve main body has a connection opening to which the connection member is fixed,
wherein the tubular part comprises:
an insertion part which is arranged within the connection opening;
a protruding part which protrudes to the electric motor side from the connection opening; and
a flange part which expands outward from the protruding part in such a manner as to face the valve main body at intervals, and
wherein the seal member is further arranged between the valve main body and the flange part and comes into contact with the valve main body and the flange part in a pressed state.

3. The electrically operated valve according to claim 2, wherein the can is fixed to the flange part.

4. The electrically operated valve according to claim 2, wherein the connection opening has a female screw in an inner peripheral surface thereof,
wherein the insertion part is provided with a male screw screwed into the female screw in an outer peripheral surface thereof and is fixed to the valve main body by being screwed into the connection opening,
wherein a stopper part is formed in the connection opening such that the insertion part is abutted and stopped against the stopper part while screwing into the connection opening and moving forward in a depth direction of the connection opening, and
wherein when the insertion part is abutted against the stopper part, the seal member comes into contact with the valve main body and the flange part in the pressed state.

5. The electrically operated valve according to any one of claims 1 to 4, wherein the seal member has a convex part coming into contact with the inner peripheral surface of the housing in an outer peripheral surface thereof.

6. The electrically operated valve according to any one of claims 1 to 4, wherein the connection member has a valve body guide part which is integrally formed with the tubular part by press working and supports the valve body so as to be movable forward and backward with respect to the valve seat.
